# FASCICULE DE BREVET EUROPEEN

(11) **EP 2 335 953 B1**
(45) Date de publication et mention de la délivrance du brevet: **19.09.2012**
(21) Numéro de dépôt: 10194344.7
(22) Date de dépôt: 09.12.2010
(51) Int. Cl.: B60H 1/00, B60H 1/32

(54) **Système de climatisation comprenant un support porteur d'éléments constitutifs dudit système**
Klimaanlage mit einem Träger, welcher Komponenten der Anlage trägt
Air conditioning system comprising a support carrying constituting elements of the system

(30) Priorité: 17.12.2009 FR 0906133
(43) Date de publication de la demande: 22.06.2011
(73) Titulaire: Valeo Systèmes Thermiques, 78321 Le Mesnil Saint Denis (FR)
(72) Inventeur: Wittmann, Klaus, 78321, La Verrière BP513 (FR); Yahia, Mohamed, 75005, Paris (FR); Nicolas, Bertrand, 78990, Elancourt (FR)
(74) Mandataire: Vieillevigne, Sébastien Nicolas Bernard

(56) Documents cités:
- EP-A1- 1 354 735
- EP-A1- 2 110 614
- DE-A1- 10 163 607
- US-A- 5 222 372

## Description

### Domaine technique de l'invention.

L'invention est du domaine des installations de ventilation, de chauffage et/ou de climatisation pour véhicule automobile. Elle a pour objet un système de climatisation comprenant des éléments qui sont agencés les uns par rapport aux autres pour limiter un risque de fuite du fluide réfrigérant.

### Etat de la technique.

Un véhicule automobile est couramment équipé d'un système de climatisation pour modifier les paramètres aérothermiques de l'air contenu à l'intérieur de l'habitacle du véhicule. Une telle modification est obtenue à partir de la délivrance d'un flux d'air intérieur dans l'habitacle. Le système de climatisation comprend une installation de ventilation, de chauffage et/ou de climatisation qui canalise la circulation du flux d'air intérieur préalablement à sa délivrance dans l'habitacle. L'installation est constituée d'un boîtier réalisé en matière plastique et logé sous une planche de bord du véhicule.

Pour modifier une température du flux d'air intérieur préalablement à son évacuation hors du boîtier vers l'habitacle, le système de climatisation comprend une boucle de climatisation à l'intérieur de laquelle circule un fluide réfrigérant, tel que du dioxyde de carbone connu sous l'appellation R744. La boucle de climatisation comprend une pluralité d'éléments tels qu'un compresseur pour porter à haute pression le fluide réfrigérant et un accumulateur pour empêcher une admission de fluide réfrigérant à l'état liquide à l'intérieur du compresseur. La boucle de climatisation comprend aussi des échangeurs de chaleur fluide réfrigérant / air intérieur pour permettre des transferts thermiques successifs entre le fluide réfrigérant et le flux d'air intérieur. Les échangeurs de chaleur fluide réfrigérant / air intérieur sont placés à l'intérieur de l'installation de manière à être traversé par le flux d'air intérieur préalablement à l'évacuation de ce dernier hors du boîtier vers l'habitacle. La boucle de climatisation comprend encore un organe de détente interposé entre les échangeurs de chaleur fluide réfrigérant / air intérieur, l'organe de détente étant prévu pour abaisser la pression de fluide réfrigérant à l'intérieur de la boucle de climatisation. Cette dernière comprend aussi un échangeur de chaleur fluide réfrigérant / air ambiant pour permettre un transfert de chaleur entre le fluide réfrigérant et un flux d'air ambiant. L'échangeur de chaleur fluide réfrigérant / air ambiant est placé à l'avant du véhicule pour faciliter un transfert thermique entre le fluide réfrigérant et le flux d'air ambiant, tel qu'un flux d'air extérieur au véhicule. La boucle de climatisation comprend enfin un bloc de distribution pour gérer la circulation du fluide réfrigérant entre les différents éléments susvisés.

Le bloc de distribution est apte à faire fonctionner la boucle de climatisation en mode chauffage ou en mode climatisation. En mode chauffage, la boucle de climatisation permet un réchauffement du flux d'air intérieur tandis qu'en mode climatisation la boucle de climatisation est apte à refroidir ce dernier. Le changement de fonctionnement de la boucle de climatisation entre ces deux modes est obtenu à partir d'une modification de la circulation du fluide réfrigérant à l'intérieur du bloc de distribution entre différents ports que ce dernier comporte.

Un problème posé par le système de climatisation décrit ci-dessus réside dans le fait que ce dernier n'est pas agencé pour limiter des risques de fuite de fluide réfrigérant. De plus, l'installation d'un tel système de climatisation sur le véhicule automobile s'avère compliquée et difficile.

Le document DE 101 63 607, qui est considéré comme l'art antérieur le plus proche, divulgue un système de climatisation d'un type connu.

### Objet de l'invention.

Le but de la présente invention est de proposer un système de climatisation qui comprend une boucle de climatisation, une première boucle secondaire et une deuxième boucle secondaire, ledit système étant agencé pour limiter des fuites de fluide réfrigérant et pour limiter des pertes de charge à l'intérieur de la boucle de climatisation notamment. Un autre but de la présente invention est de proposer un tel système de climatisation qui soit aisément installable sur un véhicule automobile.

Le système de climatisation de la présente invention est un système de climatisation comprenant des éléments constitutifs de l'une quelconque d'une boucle de climatisation à l'intérieur de laquelle circule un fluide réfrigérant FR, d'une première boucle secondaire à l'intérieur de laquelle circule un fluide caloporteur et d'une deuxième boucle secondaire à l'intérieur de laquelle circule un liquide caloporteur LC. Le système de climatisation comprend un support sur lequel sont rapportés lesdits éléments.

Ledit support est un ensemble monobloc qui présente des canalisations internes pour mettre en communication les composants de la boucle de climatisation et les composants de la première et de la deuxième boucle secondaire. Le support monobloc rassemble donc en un même point au moins un bloc de distribution, un échangeur de chaleur fluide réfrigérant / fluide caloporteur circulant dans la première boucle secondaire, un échangeur de chaleur fluide réfrigérant / fluide caloporteur circulant dans la deuxième boucle secondaire, un échangeur interne destinée à échanger entre la haute pression/haute température du fluide réfrigérant et la basse pression/basse température du même fluide réfrigérant et un accumulateur ou une bouteille servant à séparer et/ou stocker la masse circulante de fluide réfrigérant au sein de la boucle.

Avantageusement, le support monobloc intègre un compresseur électrique ou hybride (c'est-à-dire l'entraînement est mécanique, en provenance d'un moteur à combustion interne, combiné à un entraînement par moteur électrique), éventuellement accompagné de son système de commande.

Enfin, le support monobloc peut être constitué de plusieurs sous-ensembles accolés les uns aux autres ou présenté un caractère unitaire, c'est-à-dire fait d'une seule pièce.

Le support est réalisé en une matière métallique ou en matière plastique.

Le support est par exemple agencé en une plateforme sur laquelle lesdits éléments sont rapportés.

Le support est par exemple encore agencé en une cage délimitant un volume interne à l'intérieur duquel lesdits éléments sont rapportés.

Le support est avantageusement pourvu d'au moins un moyen de fixation à un châssis du véhicule.

Le support est préférentiellement équipé d'au moins un moyen de préhension.

De préférence, les éléments comprennent au moins un compresseur électrique ou hybride, un échangeur de chaleur interne, un échangeur de chaleur fluide réfrigérant / fluide caloporteur et un échangeur de chaleur fluide réfrigérant / liquide caloporteur.

Les éléments comprennent avantageusement un bloc de distribution.

Les éléments comprennent préférentiellement une première pompe constitutive de la première boucle secondaire et une deuxième pompe constitutive de la deuxième boucle secondaire.

De préférence, la première boucle secondaire est pourvue de premiers moyens de raccordement à un premier échangeur thermique fluide caloporteur / flux d'air intérieur tandis que la deuxième boucle secondaire est pourvue de deuxièmes moyens de raccordement à un deuxième échangeur thermique liquide caloporteur / flux d'air intérieur.

Le système de climatisation comprend avantageusement un échangeur de chaleur fluide réfrigérant / air ambiant.

Selon une variante de réalisation, l'échangeur de chaleur fluide réfrigérant / air ambiant est rapporté sur le support.

Selon une autre variante de réalisation, la boucle de climatisation est pourvue de moyens de jonction à l'échangeur de chaleur fluide réfrigérant / air ambiant.

### Description des figures.

La présente invention sera mieux comprise à la lecture de la description qui va en être faite d'exemples de réalisation, en relation avec les figures des planches annexées, dans lesquelles :
La fig.1 est une vue schématique d'un système de climatisation selon une première variante de réalisation de la présente invention.
La fig.2 est une vue schématique d'un système de climatisation selon une deuxième variante de réalisation de la présente invention.
Les fig.3 et fig.4 sont des vues schématiques partielles du système de climatisation illustré sur les figures précédentes.

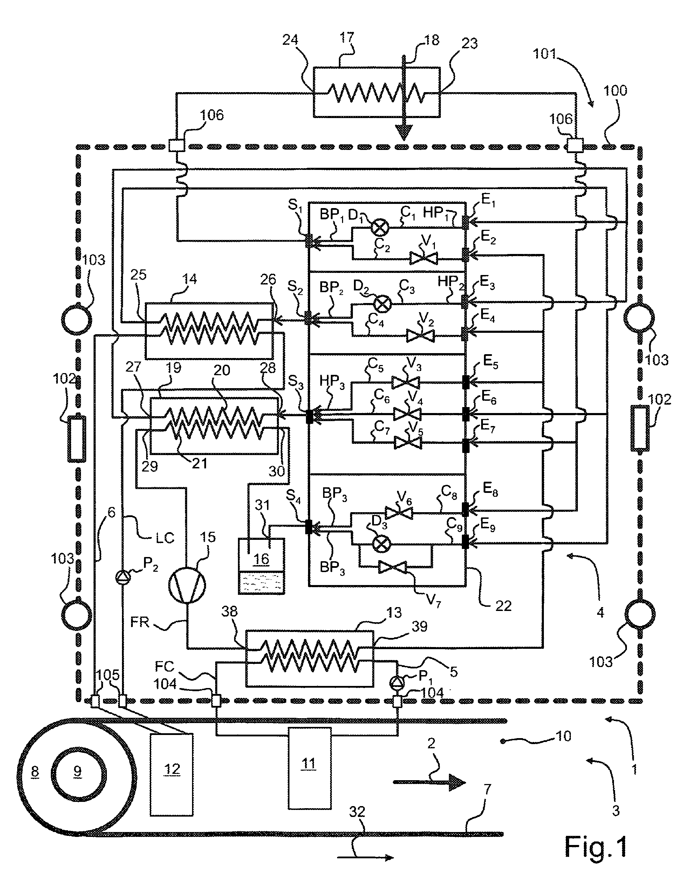

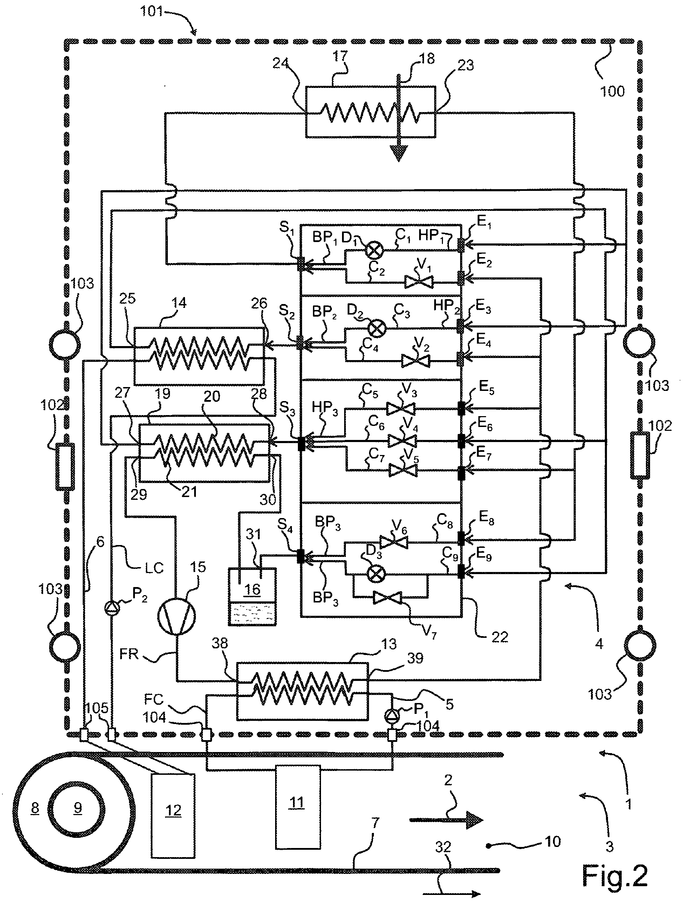

Sur les fig.1 et fig.2, un véhicule automobile est équipé d'un système de climatisation 1 pour modifier les paramètres aérothermiques de l'air contenu à l'intérieur de l'habitacle. Une telle modification est obtenue à partir de la délivrance à l'intérieur de l'habitacle d'un flux d'air intérieur 2.

A cet effet, le système de climatisation 1 comprend :
- une installation de ventilation de chauffage et/ou de climatisation 3 apte à canaliser la circulation du flux d'air intérieur 2 préalablement à sa délivrance à l'intérieur de l'habitacle,
- une boucle de climatisation 4 à l'intérieur de laquelle circule un fluide réfrigérant FR, préférentiellement supercritique, tel que le dioxyde de carbone connu sous l'appellation R744, ou tel qu'un composé azéotropique connu sous l'appellation HFO-1234 yf,
- une première boucle secondaire 5 à l'intérieur de laquelle circule un fluide caloporteur FC, tel qu'un mélange d'eau et de glycol, et
- une deuxième boucle secondaire 6 à l'intérieur de laquelle circule un liquide caloporteur LC, tel qu'un mélange d'eau et de glycol.

L'installation de ventilation de chauffage et/ou de climatisation 3 est principalement constituée d'un boîtier 7 réalisé en matière plastique et logé par exemple sous une planche de bord du véhicule. Ladite installation 3 loge un pulseur 8 pour faire circuler le flux d'air intérieur 2 depuis au moins une bouche d'admission d'air 9 vers au moins une bouche d'évacuation d'air 10 que comporte le boîtier 7. La bouche d'évacuation d'air 10 permet une délivrance du flux d'air intérieur 2 hors du boîtier 7 vers l'habitacle du véhicule.

Pour rendre possible une modification de la température du flux d'air intérieur 2 préalablement à sa délivrance dans l'habitacle, ladite installation 3 loge un premier échangeur thermique fluide caloporteur / flux d'air intérieur 11 pour permettre un transfert thermique entre le fluide caloporteur FC et le flux d'air intérieur 2, et un deuxième échangeur thermique liquide caloporteur / flux d'air intérieur 12 pour permettre un transfert thermique entre le liquide caloporteur LC et le flux d'air intérieur 2.

Le premier échangeur thermique fluide caloporteur / flux d'air intérieur 11 est constitutif de la première boucle secondaire 5. Cette dernière comprend également un échangeur de chaleur fluide réfrigérant / fluide caloporteur 13 pour permettre un transfert thermique entre le fluide réfrigérant FR et le fluide caloporteur FC. Enfin, la première boucle secondaire 5 comprend une première pompe P₁ pour faire circuler le fluide caloporteur FC entre le premier échangeur thermique fluide caloporteur / flux d'air intérieur 11 et l'échangeur de chaleur fluide réfrigérant / fluide caloporteur 13.

Le deuxième échangeur thermique liquide caloporteur / flux d'air intérieur 12 est constitutif de la deuxième boucle secondaire 6. Cette dernière comprend également un échangeur de chaleur fluide réfrigérant / liquide caloporteur 14 pour permettre un transfert thermique entre le fluide réfrigérant FR et le liquide caloporteur LC. Enfin, la deuxième boucle secondaire 6 comprend une deuxième pompe P₂ pour faire circuler le liquide caloporteur LC entre le deuxième échangeur thermique liquide caloporteur / flux d'air intérieur 12 et l'échangeur de chaleur fluide réfrigérant / liquide caloporteur 14.

L'échangeur de chaleur fluide réfrigérant / fluide caloporteur 13 et l'échangeur de chaleur fluide réfrigérant / liquide caloporteur 14 sont également constitutifs de la boucle de climatisation 4 pour permettre un transfert thermique entre le fluide réfrigérant FR et respectivement le fluide caloporteur FC et le liquide caloporteur LC.

La boucle de climatisation 4 comprend également un compresseur électrique ou hybride électrique 15 pour porter le fluide réfrigérant FR à une haute pression. Le compresseur électrique ou hybride 15 est préférentiellement relié fluidiquement à un accumulateur 16 pour éviter une admission de fluide réfrigérant FR à l'état liquide à l'intérieur du compresseur électrique ou hybride 15. La boucle de climatisation 4 comprend aussi un échangeur de chaleur fluide réfrigérant / air ambiant 17 pour permettre un transfert thermique entre le fluide réfrigérant FR et un flux d'air ambiant 18 qui le traverse. Ce dernier est notamment un flux d'un air extérieur au véhicule. L'échangeur de chaleur fluide réfrigérant / air ambiant 17 est préférentiellement placé à l'avant du véhicule pour faciliter le transfert thermique entre le fluide réfrigérant FR et le flux d'air ambiant 18. La boucle de climatisation 4 comprend encore une pluralité d'organes de détente D₁,D₂,D₃ pour permettre une détente du fluide réfrigérant FR depuis la haute pression vers une basse pression. Les organes de détente D₁,D₂,D₃ sont notamment des dispositifs de détente à commande électronique. Ainsi, la boucle de climatisation 4 comprend une pluralité de lignes haute pression HP₁,HP₂,HP₃ ménagée entre le compresseur électrique ou hybride 15 et au moins l'un des organes de détente D₁,D₂,D₃ ainsi qu'une pluralité de lignes basse pression BP₁,BP₂,BP₃ ménagées entre au moins l'un des organes de détente D₁,D₂,D₃ et le compresseur électrique ou hybride. Enfin, la boucle de climatisation 4 comprend un échangeur de chaleur interne 19 comportant un canal haute pression 20 et un canal basse pression 21 pour permettre un transfert thermique entre le fluide réfrigérant FR circulant à l'intérieur du canal haute pression 20 et le fluide réfrigérant FR circulant à l'intérieur du canal basse pression 21. Selon des modes de fonctionnement variés de la boucle de climatisation 4, le canal haute pression 20 est constitutif de l'une des lignes haute pression HP₁,HP₂,HP₃ tandis que le canal basse pression 21 est constitutif de l'une des lignes basse pression BP₁,BP₂,BP₃.

La boucle de climatisation 4 est apte à fonctionner en mode chauffage selon lequel le flux d'air intérieur 2 est réchauffé par le premier échangeur thermique fluide caloporteur / flux d'air intérieur 11 et le deuxième échangeur thermique liquide caloporteur / flux d'air intérieur 12. La boucle de climatisation 4 est aussi à même de fonctionner en mode climatisation selon lequel le flux d'air intérieur 2 est refroidi par le deuxième échangeur thermique liquide caloporteur / flux d'air intérieur 12, le premier échangeur thermique fluide caloporteur / flux d'air intérieur 11 étant inopérant. Enfin, la boucle de climatisation est propre à fonctionner en mode déshumidification selon lequel le flux d'air intérieur 2 est tout d'abord refroidi par le deuxième échangeur thermique liquide caloporteur / flux d'air 12, puis réchauffé par le premier échangeur thermique fluide caloporteur / flux d'air intérieur 11.

Tout particulièrement, on notera que l'échangeur de chaleur fluide réfrigérant / liquide caloporteur 14 circulant dans la deuxième boucle secondaire (6) se comporte comme une source froide en mode climatisation et déshumidification alors qu'il se comporte comme une source chaude complémentaire au premier échangeur thermique fluide caloporteur / flux d'air intérieur 11 logé dans le boîtier 7 de l'installation 3. En mode chauffage, l'échangeur de chaleur fluide réfrigérant / liquide caloporteur 14 se comporte alors comme une refroidisseur de gaz refroidissant le fluide réfrigérant FR circulant dans la boucle de climatisation ce qui tend à améliorer les performances de la boucle de climatisation quand celle-ci fonctionne en mode chauffage. Il s'agit donc d'une boucle de climatisation 4 dans laquelle circule un fluide réfrigérant FR et comprenant un compresseur 15, avantageusement électrique ou hybride, un échangeur de chaleur fluide réfrigérant / air ambiant 17, au moins trois organes de détente D₁,D₂,D₃, avantageusement rassemblés dans un bloc de distribution 22 tel que décrit ci-dessous, un échangeur de chaleur fluide réfrigérant / fluide caloporteur 13 constitutif de ladite boucle de climatisation 4 et d'une première boucle secondaire 5 à l'intérieur de laquelle circule un fluide caloporteur FC, un échangeur de chaleur fluide réfrigérant / liquide caloporteur 14 constitutif de ladite boucle de climatisation 4 et d'une deuxième boucle secondaire 6 à l'intérieur de laquelle circule un liquide caloporteur LC, un échangeur de chaleur interne 19, ladite boucle fonctionnant :
- selon un mode chauffage dans lequel l'échangeur de chaleur fluide réfrigérant / air ambiant 17 est chauffé par l'air ambiant alors que l'échangeur de chaleur fluide réfrigérant / fluide caloporteur 13 et l'échangeur de chaleur fluide réfrigérant / liquide caloporteur 14 sont refroidit par le fluide caloporteur FC et le liquide caloporteur LC
- selon un mode climatisation dans lequel l'échangeur de chaleur fluide réfrigérant / air ambiant 17 est refroidit par l'air ambiant, l'échangeur de chaleur fluide réfrigérant / fluide caloporteur 13 est inopérant et l'échangeur de chaleur fluide réfrigérant / liquide caloporteur 14 est chauffé par le liquide caloporteur LC,
- selon un mode déshumidification dans lequel l'échangeur de chaleur fluide réfrigérant / air ambiant 17 est chauffé par l'air ambiant, l'échangeur de chaleur fluide réfrigérant / fluide caloporteur 13 est refroidit par le fluide caloporteur FC et l'échangeur de chaleur fluide réfrigérant / liquide caloporteur 14 est chauffé par le liquide caloporteur LC,
- ledit échangeur de chaleur fluide réfrigérant / liquide caloporteur 14 agissant comme refroidisseur de gaz du fluide réfrigérant FR dans le mode chauffage en complément de l'échangeur de chaleur fluide réfrigérant / fluide caloporteur 13 agissant comme refroidisseur de gaz du fluide réfrigérant FR.

On constate aussi par exemple sur la figure 1 que l'échangeur de chaleur fluide réfrigérant / liquide caloporteur 14 est placé en série dans la boucle de climatisation en aval de l'échangeur de chaleur fluide réfrigérant / fluide caloporteur 13, les deux échangeurs étant traversés par le fluide réfrigérant FR soumis à haute pression/haute température quand la boucle est en mode chauffage.

En mode déshumidification, le fluide réfrigérant soumis à haute pression/haute température traverse successivement l'échangeur de chaleur fluide réfrigérant / fluide caloporteur 13, l'échangeur de chaleur interne 19 puis se sépare en deux au moyen du bloc de distribution 22 par alimentant en fluide réfrigérant FR l'échangeur de chaleur fluide réfrigérant / liquide caloporteur 14 en parallèle de l'échangeur de chaleur fluide réfrigérant / air ambiant 17. Le bloc de distribution comporte deux organes de détente D₁ et D₂ qui détendent le fluide à deux niveaux de pressions différentes, la pression du fluide réfrigérant après le premier organe de détente D₁ étant inférieure à la pression après le deuxième organe de détente D₂.

Après avoir traversé l'échangeur de chaleur fluide réfrigérant / liquide caloporteur 14, le fluide réfrigérant retourne dans le bloc de distribution 22 pour y être détendu par le troisième organe de détente D₃ de sorte à ramener la pression du fluide réfrigérant FR à une pression équivalente à celle de ce même fluide en sortie de l'échangeur de chaleur fluide réfrigérant / air ambiant 17. Le bloc de distribution comprend alors un conduit en « Y » qui ramène en un seul point le fluide réfrigérant FR issue du troisième organe de détente D3 et le fluide réfrigérant FR issue de l'échangeur de chaleur fluide réfrigérant / air ambiant 17, l'ensemble étant conduit vers l'accumulateur 16.

Cet arrangement permet d'assurer simplement la fonction déshumidification en faisant fonctionner simultanément le deuxième échangeur thermique liquide caloporteur / flux d'air intérieur 12 comme un évaporateur et le premier échangeur thermique fluide caloporteur / flux d'air intérieur 11 comme un radiateur.

La boucle de climatisation 4 comprend un bloc de distribution 22 comportant neuf entrées E₁,E₂,E₃,E₄,E₅,E₆,E₇,E₈,E₉ de fluide réfrigérant FR à l'intérieur dudit bloc 22 et quatre sorties S₁,S₂,S₃,S₄ de fluide réfrigérant FR hors dudit bloc 22. Ce dernier est apte à gérer la circulation du fluide réfrigérant FR à l'intérieur de la boucle de climatisation 4.

Le bloc de distribution 22 comprend une première entrée E₁ et une deuxième entrée E₂ de fluide réfrigérant FR à l'intérieur dudit bloc 22 ainsi qu'une première sortie S₁ de fluide réfrigérant FR hors dudit bloc 22. La première sortie S₁ est en communication fluidique avec la première entrée E₁ et la deuxième entrée E₂. Plus particulièrement, un premier canal C₁ est ménagé entre la première entrée E₁ et la première sortie S₁ pour permettre un écoulement du fluide réfrigérant FR depuis la première entrée E₁ vers la première sortie S₁. Plus particulièrement encore, un deuxième canal C₂ est ménagé entre la deuxième entrée E₂ et la première sortie S₁ pour permettre un écoulement du fluide réfrigérant FR depuis la première entrée E₂ vers la première sortie S₁. Le premier canal C₁ est pourvu du premier organe de détente D₁ tandis que le deuxième canal C₂ est équipé d'une première vanne V₁ apte à autoriser ou interdire un passage du fluide réfrigérant FR à l'intérieur du deuxième canal C₂.

Le bloc de distribution 22 comprend une troisième entrée E₃ et une quatrième entrée E₄ de fluide réfrigérant FR à l'intérieur dudit bloc 22 ainsi qu'une deuxième sortie S₂ de fluide réfrigérant FR hors dudit bloc 22. La deuxième sortie S₂ est en communication fluidique avec la troisième entrée E₃ et la quatrième entrée E₄. Plus particulièrement, un troisième canal C₃ est ménagé entre la troisième entrée E₃ et la deuxième sortie S₂ pour permettre un écoulement du fluide réfrigérant FR depuis la troisième entrée E₃ vers la deuxième sortie S₂. Plus particulièrement encore, un quatrième canal C₄ est ménagé entre la quatrième entrée E₄ et la deuxième sortie S₂ pour permettre un écoulement du fluide réfrigérant FR depuis la quatrième entrée E₄ vers la deuxième sortie S₂. Le troisième canal C₃ est pourvu du deuxième organe de détente D₂ tandis que le quatrième canal C₄ est équipé d'une deuxième vanne V₂ apte à autoriser ou interdire un passage du fluide réfrigérant FR à l'intérieur du quatrième canal C₄.

Le bloc de distribution 22 comprend une cinquième entrée E₅, une sixième entrée E₆ et une septième entrée E₇ de fluide réfrigérant FR à l'intérieur dudit bloc 22 ainsi qu'une troisième sortie S₃ de fluide réfrigérant FR hors dudit bloc 22. La troisième sortie S₃ est en communication fluidique avec la cinquième entrée E₅, la sixième entrée E₆ et la septième entrée E₇. Plus particulièrement, un cinquième canal C₅ est ménagé entre la cinquième entrée E₅ et la troisième sortie S₃ pour permettre un écoulement du fluide réfrigérant FR depuis la cinquième entrée E₅ vers la troisième sortie S₃. Plus particulièrement, un sixième canal C₆ est ménagé entre la sixième entrée E₆ et la troisième sortie S₃ pour permettre un écoulement du fluide réfrigérant FR depuis la sixième entrée E₆ vers la troisième sortie S₃. Plus particulièrement enfin, un septième canal C₇ est ménagé entre la septième entrée E₇ et la troisième sortie S₃ pour permettre un écoulement du fluide réfrigérant FR depuis la septième entrée E₇ vers la troisième sortie S₃. Le cinquième canal C₅ est pourvu d'une troisième vanne V₃ apte à autoriser ou interdire un passage du fluide réfrigérant FR à l'intérieur du cinquième canal C₅. Le sixième canal C₆ est pourvu d'une quatrième vanne V₄ apte à autoriser ou interdire un passage du fluide réfrigérant FR à l'intérieur du sixième canal C₆. Le septième canal C₇ est pourvu d'une cinquième vanne V₅ apte à autoriser ou interdire un passage du fluide réfrigérant FR à l'intérieur du septième canal C_{7.}

Le bloc de distribution 22 comprend une huitième entrée E₈ et une neuvième entrée E₉ de fluide réfrigérant FR à l'intérieur dudit bloc 22 ainsi qu'une quatrième sortie S₄ de fluide réfrigérant FR hors dudit bloc 22. La quatrième sortie S₄ est en communication fluidique avec la huitième entrée E₈ et la neuvième entrée E₉. Plus particulièrement, un huitième canal C₈ est ménagé entre la huitième entrée E₈ et la quatrième sortie S₄ pour permettre un écoulement du fluide réfrigérant FR depuis la huitième entrée E₈ vers la quatrième sortie S_{4.}Plus particulièrement encore, un neuvième canal C₉ est ménagé entre la neuvième entrée E₉ et la quatrième sortie S₄ pour permettre un écoulement du fluide réfrigérant FR depuis la neuvième entrée E₉ vers la quatrième sortie S₄. Le huitième canal C₈ est pourvu d'une sixième vanne V₆ apte à autoriser ou interdire un passage du fluide réfrigérant FR à l'intérieur du huitième canal C₈. Le neuvième canal C₉ est équipé du troisième organe de détente D₃. Une septième vanne V₇ est placée en parallèle du troisième organe de détente D₃ pour permettre une circulation du fluide réfrigérant FR entre la neuvième entrée E₉ et la quatrième sortie S₄ à partir d'un contournement du troisième organe de détente D₃.

L'échangeur de chaleur fluide réfrigérant / air ambiant 17 comporte un orifice d'évacuation 23 de fluide réfrigérant FR qui est en relation fluidique avec la septième entrée E₇ et la huitième entrée E₈. L'échangeur de chaleur fluide réfrigérant / air ambiant 17 comporte également un orifice d'admission 24 de fluide réfrigérant FR qui est en relation fluidique avec la première sortie S₁.

L'échangeur de chaleur fluide réfrigérant / liquide caloporteur 14 comporte un orifice de sortie 25 de fluide réfrigérant FR qui est en relation fluidique avec la sixième entrée E₆ et la neuvième entrée E₉. L'échangeur de chaleur fluide réfrigérant / liquide caloporteur 14 comporte également un orifice d'entrée 26 de fluide réfrigérant FR qui est en relation fluidique avec la deuxième sortie S₂.

L'échangeur de chaleur interne 19 comporte une sortie haute pression 27 qui est en relation fluidique avec la première entrée E₁ et la troisième entrée E₃. L'échangeur de chaleur interne 19 comporte aussi une entrée haute pression 28 qui est en relation fluidique avec la troisième sortie S₃. La sortie haute pression 27 et l'entrée haute pression 28 sont reliées de manière fluidique l'une à l'autre par l'intermédiaire du canal haute pression 20. Parallèlement, l'échangeur de chaleur interne 19 comporte une sortie basse pression 29 qui est en relation fluidique avec une entrée de fluide réfrigérant du compresseur électrique ou hybride 15. L'échangeur de chaleur interne 19 comporte aussi une entrée basse pression 30 qui est en relation fluidique avec une sortie de fluide réfrigérant FR hors de l'accumulateur 16. La sortie basse pression 29 et l'entrée basse pression 30 sont reliées de manière fluidique l'une à l'autre par l'intermédiaire du canal basse pression 21. Le canal haute pression 20 et le canal basse pression 21 sont agencés l'un par rapport à l'autre de manière à permettre un transfert thermique entre le fluide réfrigérant FR circulant à l'intérieur d'un des canaux 20, 21 et le fluide réfrigérant FR circulant à l'intérieur de l'autre des canaux 21,20.

L'accumulateur 16 comporte également un orifice d'arrivée 31 du fluide réfrigérant FR en provenance de la sortie S₄.

L'échangeur de chaleur fluide réfrigérant / fluide caloporteur 13 reçoit le fluide réfrigérant FR en provenance du compresseur électrique ou hybride 15 pour l'évacuer vers la deuxième entrée E₂ ou la quatrième entrée E₄ ou la cinquième entrée E₅ avec lesquelles l'échangeur de chaleur fluide réfrigérant / fluide caloporteur 13 est en relation fluidique.

Le premier organe de détente D₁, le deuxième organe de détente D₂ et le troisième organe de détente D₃ sont aptes à autoriser ou interdire un passage du fluide réfrigérant FR à l'intérieur du canal C₁,C₂,C₃ auxquels ils sont respectivement affectés.

Pour minimiser les risques de fuite de fluide réfrigérant FR, la présente invention propose que le système de climatisation 1 comprenne un support 100 porteur d'éléments tels que le compresseur électrique ou hybride 15, l'échangeur de chaleur fluide réfrigérant / fluide caloporteur 13 de la première boucle secondaire 5, l'échangeur de chaleur fluide réfrigérant / fluide caloporteur 14 de la deuxième boucle secondaire 6, l'accumulateur 16, l'échangeur de chaleur interne 19, le bloc de distribution 22, la première pompe P₁, la deuxième pompe P₂ qui le constituent et qui sont constitutifs de la boucle de climatisation 4, de la première boucle secondaire 5 ou de la deuxième boucle secondaire 6. Autrement dit, hormis le premier échangeur thermique fluide caloporteur / flux d'air intérieur 11, le deuxième échangeur thermique liquide caloporteur / flux d'air intérieur 12 qui sont logés à l'intérieur de ladite installation 3 et l'échangeur de chaleur fluide réfrigérant / air ambiant 17 placé en face avant du véhicule, tout ou partie des éléments tels que le compresseur électrique ou hybride 15, l'échangeur de chaleur fluide réfrigérant / fluide caloporteur 13 de la première boucle secondaire 5, l'échangeur de chaleur fluide réfrigérant / fluide caloporteur 14 de la deuxième boucle secondaire 6, l'accumulateur 16, l'échangeur de chaleur interne 19, le bloc de distribution 22, la première pompe P₁, la deuxième pompe P₂ constitutifs de la boucle de climatisation 4, de la première boucle secondaire 5 et/ou de la deuxième boucle secondaire 6 sont susceptibles d'être rapportés sur ou dans le volume interne du support 100. Préférentiellement, l'ensemble de ces éléments tels que le compresseur électrique ou hybride 15, l'échangeur de chaleur fluide réfrigérant / fluide caloporteur 13 de la première boucle secondaire 5, l'échangeur de chaleur fluide réfrigérant / fluide caloporteur 14 de la deuxième boucle secondaire 6, l'accumulateur 16, l'échangeur de chaleur interne 19, le bloc de distribution 22, la première pompe P₁, la deuxième pompe P₂ est placé sur le support 100 ou dans le support 100, ce dernier comprenant des canalisations internes permettant la communication fluidique entre ces éléments. Un tel agencement permet de limiter les risques de fuite de fluide réfrigérant FR et de diminuer les pertes de charge à l'intérieur de la boucle de climatisation 4 notamment.

Ainsi, selon la première variante de réalisation illustrée sur la fig.1, les éléments rassemblés sur le support 100 sont le compresseur électrique ou hybride 15, l'accumulateur 16, l'échangeur de chaleur fluide réfrigérant / fluide caloporteur 13, l'échangeur de chaleur fluide réfrigérant / liquide caloporteur 14, l'échangeur de chaleur interne 19, le bloc de distribution 22, la première pompe P₁ et la deuxième pompe P₂. Dans ce cas là, le support 100 est susceptible d'être disposé en un quelconque endroit d'un compartiment moteur du véhicule.

Selon la deuxième variante de réalisation illustrée sur la fig.2, les éléments rassemblés sur ou dans le support 100 sont le compresseur électrique ou hybride 15, l'accumulateur 16, l'échangeur de chaleur fluide réfrigérant / fluide caloporteur 13, l'échangeur de chaleur fluide réfrigérant / liquide caloporteur 14, l'échangeur de chaleur interne 19, le bloc de distribution 22, la première pompe P₁ la deuxième pompe P₂ et l'échangeur de chaleur fluide réfrigérant / air ambiant 17. Dans cette variante de l'invention, l'échangeur de chaleur fluide réfrigérant / air ambiant 17 est incorporé au support 100, c'est-à-dire que ce dernier maintient mécaniquement l'échangeur de chaleur fluide réfrigérant / air ambiant 17 tout en assurant la circulation d'air ambiant à son travers. On réduit à nouveau le risque de fuite de fluide réfrigérant.

Dans ce cas-là, le support 100 est placé en une zone avant du compartiment moteur du véhicule de telle sorte que l'échangeur de chaleur fluide réfrigérant / air ambiant 17 permette un échange thermique optimisé entre le fluide réfrigérant FR et le flux d'air ambiant 18.

Le support 100 et les éléments qui sont le compresseur électrique ou hybride 15, l'accumulateur 16, l'échangeur de chaleur fluide réfrigérant / fluide caloporteur 13, l'échangeur de chaleur fluide réfrigérant / liquide caloporteur 14, l'échangeur de chaleur interne 19, le bloc de distribution 22, la première pompe P₁ la deuxième pompe P₂ (pour la première variante) et l'échangeur de chaleur fluide réfrigérant / air ambiant 17 (pour la deuxième variante de l'invention) que le support 100 porte forment un ensemble unitaire 101 manipulable d'un seul tenant ce qui facilite son montage sur le véhicule. A cet effet, le support 100 est pourvu de moyens de préhension 102, tels qu'une paire de poignée ou analogue pour permettre sa prise par un utilisateur lors du montage du système de climatisation 1 sur le véhicule. Le support 100 est également pourvu de moyens de fixation 103 à un châssis du véhicule, tel que des parois du compartiment moteur du véhicule. Les moyens de fixation 103 sont indifféremment du type par boulonnage, par emboîtement, par clipage ou analogue. Les moyens de fixation 103 sont préférentiellement réversibles pour faciliter une éventuelle opération de maintenance.

La première boucle secondaire 5 est pourvue de premiers moyens de raccordement 104 disposés entre d'une part le premier échangeur thermique fluide caloporteur / flux d'air intérieur 11 et d'autre part la première pompe P₁ et l'échangeur de chaleur fluide réfrigérant / fluide caloporteur 13. Les premiers moyens de raccordement 104 sont par exemple du type bague et manchon de raccordement de type démontable.

La deuxième boucle secondaire 6 est pourvue de deuxièmes moyens de raccordement 105 disposés entre d'une part le deuxième échangeur thermique liquide caloporteur / flux d'air intérieur 12 et d'autre part la deuxième pompe P2 et l'échangeur de chaleur fluide réfrigérant / liquide caloporteur 14. Les deuxièmes moyens de raccordement 105 sont par exemple aussi du type bague et manchon de raccordement de type démontable.

Sur la fig.2, la boucle de climatisation 4 est pourvue de moyens de jonction 106 disposés entre l'échangeur de chaleur fluide réfrigérant / air ambiant 17 et d'une part la première sortie S₁ et d'autre part la septième entrée E₇ et la neuvième entrée E₉. Les moyens de jonction 106 sont par exemple encore du type bague et manchon de raccordement.

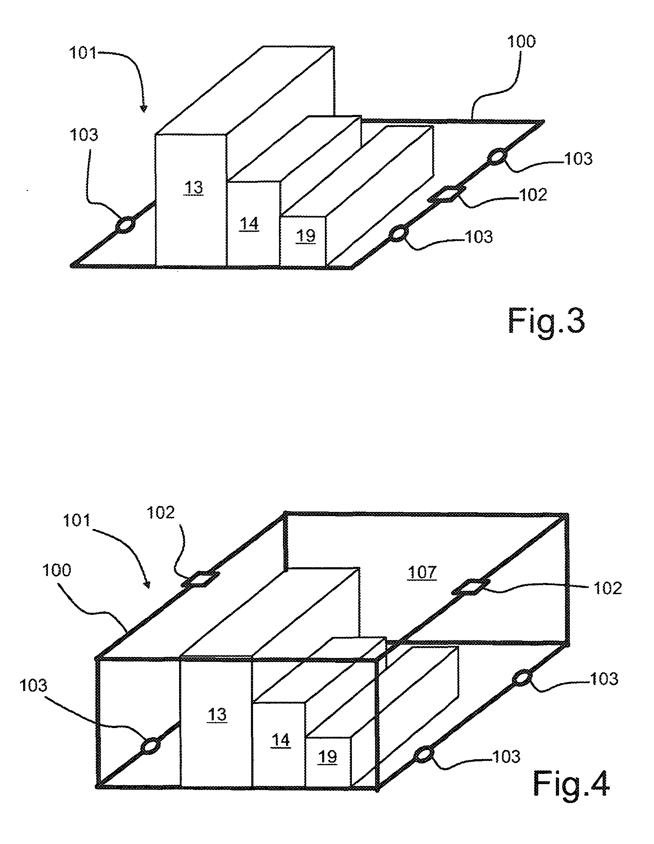

Sur la fig.3, le support 100 est agencé en une plateforme, indifféremment réalisée en matière métallique ou plastique, sur laquelle sont rapportés les éléments tels que le compresseur électrique ou hybride 15, l'accumulateur 16, l'échangeur de chaleur fluide réfrigérant / fluide caloporteur 13, l'échangeur de chaleur fluide réfrigérant / liquide caloporteur 14, l'échangeur de chaleur interne 19, le bloc de distribution 22, la première pompe P₁ la deuxième pompe P₂ (pour la première variante) et l'échangeur de chaleur fluide réfrigérant / air ambiant 17 (pour la deuxième variante de l'invention).

Sur la fig.4, le support 100 est agencé en une cage, indifféremment réalisée en matière métallique ou plastique, qui délimite un volume intérieur 107 à l'intérieur duquel sont logés les éléments qui sont le compresseur électrique ou hybride 15, l'accumulateur 16, l'échangeur de chaleur fluide réfrigérant / fluide caloporteur 13, l'échangeur de chaleur fluide réfrigérant / liquide caloporteur 14, l'échangeur de chaleur interne 19, le bloc de distribution 22, la première pompe P₁ la deuxième pompe P₂ (pour la première variante) et l'échangeur de chaleur fluide réfrigérant / air ambiant 17 (pour la deuxième variante de l'invention). Dans ce cas, la cage peut être formée par usinage d'un bloc métallique.

## Revendications

1. Système de climatisation (1) d'un véhicule automobile comprenant des éléments tels qu'au moins un échangeur de chaleur fluide réfrigérant / fluide caloporteur (13) constitutif d'une boucle de climatisation (4) à l'intérieur de laquelle circule un fluide réfrigérant FR et d'une première boucle secondaire (5) à l'intérieur de laquelle circule un fluide caloporteur FC, un échangeur de chaleur fluide réfrigérant / liquide caloporteur (14) constitutif de ladite boucle de climatisation (4) et d'une deuxième boucle secondaire (6) à l'intérieur de laquelle circule un liquide caloporteur LC, un échangeur de chaleur interne (19), un bloc de distribution (22), **caractérisé en ce que** le système de climatisation (1) comprend un support (100) monobloc sur lequel sont rapportés lesdits éléments (13,14,19,22).

2. Système de climatisation (1) selon la revendication 1, dans lequel un élément est un compresseur électrique ou hybride (15) rapporté sur le support (100).

3. Système de climatisation (1) selon les revendications 1 ou 2, dans lequel un élément est un accumulateur (16) rapporté sur le support (100).

4. Système de climatisation (1) selon l'une quelconque des revendications précédentes, dans lequel des éléments sont une première pompe (P₁) de circulation du fluide caloporteur FC dans la première boucle secondaire (5) et une deuxième pompe (P₂) de circulation du fluide caloporteur LC dans la deuxième boucle secondaire (6) qui sont rapportées sur le support (100).

5. Système de climatisation (1) selon l'une quelconque des revendications précédentes, dans lequel un élément est une échangeur de chaleur fluide réfrigérant / air ambiant (17) rapporté sur le support (100).

6. Système de climatisation (1) selon l'une quelconque des revendications précédentes, **caractérisé en ce que** le support (100) est agencé en une plateforme sur laquelle lesdits éléments sont rapportés.

7. Système de climatisation (1) selon l'une quelconque des revendications 1 à 5, **caractérisé en ce que** le support (100) est agencé en une cage délimitant un volume interne (107) à l'intérieur duquel lesdits éléments sont rapportés.

8. Système de climatisation (1) selon l'une quelconque des revendications précédentes, **caractérisé en ce que** le support (100) est pourvu d'au moins un moyen de fixation (103) à un châssis du véhicule et d'au moins un moyen de préhension (102).

9. Système de climatisation (1) selon l'une quelconque des revendications précédentes, **caractérisé en ce que** la première boucle secondaire (5) est pourvue de premiers moyens de raccordement (104) à un premier échangeur thermique fluide caloporteur / flux d'air intérieur (11) tandis que la deuxième boucle secondaire (6) est pourvue de deuxièmes moyens de raccordement (105) à un deuxième échangeur thermique liquide caloporteur / flux d'air intérieur (12).

10. Système de climatisation (1) selon la revendication 5, **caractérisé en ce que** la boucle de climatisation (4) est pourvue de moyens de jonction (106) à l'échangeur de chaleur fluide réfrigérant / air ambiant (17).

## Claims

1. Motor vehicle air conditioning system (1) comprising elements such as at least one refrigerant/coolant heat exchanger (13) which is a constituent of an air conditioning loop (4) in which a refrigerant FR flows and of a first secondary loop (5) in which a coolant FC flows, a refrigerant/coolant heat exchanger (14) which is a constituent of said air conditioning loop (4) and of a second secondary loop (6) in which a coolant LC flows, an internal heat exchanger (19), a distribution unit (22), **characterized in that** the air conditioning system (1) comprises a one-piece support (100) on which said elements (13, 14, 19, 22) are fixed.

2. Air conditioning system (1) according to Claim 1, in which one element is an electric or hybrid compressor (15) fixed to the support (100).

3. Air conditioning system (1) according to Claim 1 or 2, in which one element is an accumulator (16) fixed to the support (100).

4. Air conditioning system (1) according to any one of the preceding claims, in which some elements are a first pump (P₁) for circulating the coolant FC in the first secondary loop (5) and a second pump (P₂) for circulating the coolant LC in the second secondary loop (6) which are fixed to the support (100).

5. Air conditioning system (1) according to any one of the preceding claims, in which one element is a refrigerant/ambient air heat exchanger (17) fixed to the support (100).

6. Air conditioning system (1) according to any one of the preceding claims, **characterized in that** the support (100) is configured as a platform on which said elements are fixed.

7. Air conditioning system (1) according to any one of Claims 1 to 5, **characterized in that** the support (100) is configured as a cage delimiting an internal volume (107) in which said elements are fixed.

8. Air conditioning system (1) according to any one of the preceding claims, **characterized in that** the support (100) is provided with at least one means (103) of attachment to a chassis of the vehicle and with at least one means (102) for holding.

9. Air conditioning system (1) according to any one of the preceding claims, **characterized in that** the first secondary loop (5) is provided with first means (104) of connection to a first coolant/interior air flow heat exchanger (11) while the second secondary loop (6) is provided with second means (105) of connection to a second coolant/interior air flow heat exchanger (12).

10. Air conditioning system (1) according to Claim 5, **characterized in that** the air conditioning loop (4) is provided with means (106) of coupling to the refrigerant/ambient air heat exchanger (17).

## Patentansprüche

1. Klimaanlage (1) eines Kraftfahrzeugs, die Komponenten, wie zum Beispiel einen Wärmeaustauscher mit Kühlmittel/Kältemittel (13), der eine Klimatisierungsschleife (4) bildet, in deren Innerem ein Kühlmittel FR zirkuliert, und eine erste Sekundärschleife (5), in deren Innerem ein Kältemittel FC zirkuliert, einen Wärmeaustauscher Kühlmittel/Kältemittel (14), der die Klimatisierungsschleife (4) bildet, und eine zweite Sekundärschleife (6), in deren Innerem eine Kälteflüssigkeit LC zirkuliert, einen internen Wärmeaustauscher (19), einen Verteilerblock (22) aufweist, **dadurch gekennzeichnet, dass** die Klimaanlage (1) einen einteiligen Träger (100) aufweist, auf dem die Komponenten (13, 14, 19, 22) angebaut sind.

2. Klimaanlage (1) nach Anspruch 1, bei der eine Komponente ein elektrischer oder hybrider Kompressor (15) ist, der auf dem Träger (100) angebaut ist.

3. Klimaanlage (1) nach den Ansprüchen 1 oder 2, bei der eine Komponente ein Speicher (16) ist, der auf dem Träger (100) angebaut ist.

4. Klimaanlage (1) nach einem der vorhergehenden Ansprüche, bei der Komponenten eine erste Pumpe (P₁) zum Umwälzen des Kältemittels FC in der ersten Sekundärschleife (5) und eine zweite Pumpe (P₂) zum Umwälzen der Kälteflüssigkeit LC in der zweiten Sekundärschleife (6), die auf dem Träger (100) angebaut sind, sind.

5. Klimaanlage (1) nach einem der vorhergehenden Ansprüche, bei der eine Komponente ein Wärmeaustauscher Kühlmittel/Umgebungsluft (17) ist, der auf dem Träger (100) angebaut ist.

6. Klimaanlage (1) nach einem der vorhergehenden Ansprüche, **dadurch gekennzeichnet, dass** der Träger (100) in einer Plattform angeordnet ist, auf der die Komponenten angebaut sind.

7. Klimaanlage (1) nach einem der Ansprüche 1 bis 5, **dadurch gekennzeichnet, dass** der Träger (100) in einem Käfig angeordnet ist, der ein Innenvolumen (107) bildet, in dessen Innerem die Komponenten angebaut sind.

8. Klimaanlage (1) nach einem der vorhergehenden Ansprüche, **dadurch gekennzeichnet, dass** der Träger (100) mit mindestens einem Mittel (103) zum Befestigen an einem Chassis des Fahrzeugs und mindestens einem Greifmittel (102) versehen ist.

9. Klimaanlage (1) nach einem der vorhergehenden Ansprüche, **dadurch gekennzeichnet, dass** die erste Sekundärschleife (5) mit ersten Mitteln (104) zum Anschließen an einen ersten Wärmeaustauscher Kältemittel/Innenluftstrom (11) versehen ist, während die zweite Sekundärschleife (6) mit zweiten Mitteln (105) zum Anschließen an einen zweiten Wärmeaustauscher Kälteflüssigkeit/ Innenluftstrom (12) versehen ist.

10. Klimaanlage (1) nach Anspruch 5, **dadurch gekennzeichnet, dass** die Klimatisierungsschleife (4) mit Mitteln (106) zum Verbinden mit dem Wärmeaustauscher Kühlmittel/Umgebungsluft (17) versehen ist.
